# EUROPEAN PATENT APPLICATION

(11) **EP 1 753 252 A1**
(43) Date of publication of application: **14.02.2007**
(21) Application number: 05734641.3
(22) Date of filing: 21.04.2005
(51) Int. Cl.: H04Q 7/22, H04B 7/24, H04Q 7/28

(54) **MOBILE COMMUNICATION SYSTEM AND ITS METHOD FOR HANDOVERING TO SMALL-SIZED RADIO BASE STATION**

(30) Priority: 17.05.2004 JP 2004146619
(71) Applicant: NEC CORPORATION, Minato-ku, Tokyo 108-8001 (JP)
(72) Inventor: TSUCHIYA, Masato, Tokyo 1088001 (JP)
(74) Representative: Wenzel & Kalkoff
(86) International application number: PCT/JP2005/007619
(87) International publication number: WO 2005/112490

(57) **Abstract**

An object of the present invention is to provide a mobile communication system which ensures that hand-over to a small base station, for a specific user provided with a service by the small base station, will always be performed even when the small base station is being used by a general user who does not receive the service. The mobile communication system comprises: a base station; a plurality of small base stations provided in an area covered by the base station as a countermeasure against dead zones of the base station; a terminal for receiving a specific service provided by the plurality of small base stations; and an RNC which has an identification number, registered therein, of the terminal for receiving a service provided by each of the plurality of small base stations, and which, when the identification number from the terminal is received, checks whether or not a free channel is available in the small base station registered corresponding to the identification number, and, if there is no free channel available in the small base station registered corresponding to the identification number, requests that a terminal not registered in the small base station be handed over to another base station and then performs hand-over to the small base station having the identification number of the terminal registered therein.

## Description

### Technical Field

The present invention relates to a mobile communication system, and more particularly to a method of hand-over to a small radio base station in the mobile communication system.

### Background Art

In the mobile communication system, a base station (hereinafter referred to as Home-BTS) smaller and lighter than a conventional base station (hereinafter referred to as BTS) is used as a countermeasure against dead zones, such as a basement. Consideration is being given to provide a service to specific users by using the Home-BTS as a private branch base station, such as in an office, and by using a domestic base station, in addition to their being used as countermeasures against dead zones. In order to provide such a service that is always in communication with the Home-BTS in the area covered by the Home-BTS, hand-over needs to be performed such that the specific user can always be connected to and can communicate with the Home-BTS in the area that is covered by the Home-BTS.

As prior art relating to hand-over, there are inventions disclosed in Japanese Patent Laid-Open No. 11-346381 and Japanese Patent Laid-Open No. 2001-189950.

The invention disclosed in Japanese Patent Laid-Open No. 11-346381 aims at enabling a radio terminal to use a service as it is from a private branch exchange of a home node by making hand-over available for the radio terminal without interrupting a call, even when the radio terminal moves from the private branch exchange of the home node to another private branch exchange. Network common database NDM and private branch exchange dependent database DB are stored in each of private branch exchanges PBX-A, PBX-B and PBX-C. When radio terminal PS-A makes position registration to radio base station CS-B1 under the control of private branch exchange PBX-B other than a home node, the radio terminal refers to network common database NDM of private branch exchange PBX-B to access private branch exchange dependent database DB of private branch exchange PBX-A of the home node, and refers to the network common database to make position registration to the private branch exchange of the home node and extracts service data for additional service from private branch exchange other than the home node that receives the position registration request.

The invention disclosed in Japanese Patent Laid-Open No. 2001-189950 aims at providing a radio exchange system to provide a service to limit the moving area of a mobile subscriber, on the basis of a home zone. The radio exchange system has a base station controller that controls transmission and reception of a signal of the mobile subscriber resident in its own cell, a mobile exchange station connected to a plurality of base station controllers, and a home zone register that stores home zone information, denoting whether or not the mobile subscriber is a subscriber of the home zone service. The mobile exchange station discriminates the propriety of acceptance of a position registration request with respect to the request of the mobile subscriber located inside/outside of the home zone, on the basis of home zone information sent from the home zone register.

When taking into consideration a case where service provision is provided to a specific user by a Home-BTS, hand-over needs to be performed such that the specific user can always be connected to and can communicate with the Home-BTS in the area covered by the Home-BTS. However, since the suitability of hand-over is determined on the basis of signal quality and the conditions of use by other users during hand-over between the conventional BTSs, there is a problem that when the Home-BTS is occupied by a general user, hand-over to the specific user cannot be performed, thereby making it impossible for the specific user to receive service.

The present invention has been made in view of the above described problem of the prior art. An object of the present invention is to provide a handover method for a small radio base station in a mobile communication system, a method which will always enable a specific user to be handed over to a Home-BTS even when the Home-BTS is occupied by a general user, and always ensure that a specific user will receive stable service.

### Disclosure of the Invention

A mobile communication system according to the present invention comprises:
a base station;
a plurality of small base stations provided in an area covered by the base station as a countermeasure against dead zones in the base station;
a terminal for receiving specific services provided by the plural small base stations; and
an RNC which has the identification number of the terminal, registered therein, for receiving a service provided by each of the plurality of small base stations, and which, when the identification number from the terminal is received, checks whether or not a free communication channel is available in the small base station registered corresponding to the identification number, and, if there is no free channel in the small base station registered corresponding to the identification number, requests that a terminal not registered in the small base station be handed over to another base station and then performs hand-over to the small base station having the identification number of the terminal registered therein.

In this case, the RNC may also be arranged in such a manner that when the identification number is received from the terminal, the RNC checks whether or not the distance between the small base station registered corresponding to the identification number and the terminal is not larger than a predetermined value, and if the distance is not larger than the predetermined value, the RNC checks whether or not a free channel is available in the small base station.

Further, the RNC may also be arranged in such a manner that when the identification number is received from the terminal, the RNC checks whether or not the communication quality of pilot signal between the small base station registered corresponding to the identification number and the terminal meets a predetermined level or more, and if the communication quality of pilot signal is the predetermined level or more, the RNC checks whether or not a free channel is available in the small base station.

A method of hand-over to a small radio base station of a mobile communication system according to the present invention is a method of hand-over to a small radio base station which is performed in a mobile communication system comprising a base station, a plurality of small base stations provided in an area covered by the base station as a countermeasure against dead zones of the base station, and a terminal for receiving specific services provided by the plurality of small base stations, the hand-over method comprising:
a first step of recognizing the identification number of a terminal which receives a service provided by each of the plurality of small base stations;
a second step of, when the identification number has been obtained, checking whether or not a free communication channel is available in the small base station registered corresponding to the identification number from the terminal; and
a third step of, if it is determined in the second step that there is no free channel in the small base station registered corresponding to the identification number, requesting a terminal which is not registered in the small base station to be handed over to another base station and then performing hand-over to the small base station that has the identification number of the terminal registered therein.

In this case, the hand-over method may also be arranged to comprise a step of, after the first step, checking whether or not the distance between the small base station registered corresponding to the identification number and the terminal is not larger than a predetermined value, and if the distance is not larger than the predetermined value, performing the second step.

Further, the hand-over method may also be arranged to comprise a step of, after the first step, checking whether or not the communication quality of pilot signal between the small base station registered corresponding to the identification number and the terminal meets a predetermined level or more, after the first step, and if the communication quality of pilot signal meets the predetermined level or more, performing the second step.

The present invention as described above is characterized in that when a terminal that receives services from respective small base stations is moving, and when there is no free channel in a small base station that provides service, hand-over to the small base station that has the identification number of the terminal registered in it is performed after a request is made to a terminal that is not registered in the small base station that it be handed over to other base stations, whereby it is possible to always perform hand-over of a specific user registered in the small base station, and to ensure the provision of a stable communication connection and service in the area covered by the small base station for the specific user.

In the present invention, in order to solve the above described problem, the position information of a registered user (to whom a registering operation to a Home-BTS is performed beforehand and an identification code including the position information of the Home-BTS is assigned) and the position information of the Home-BTS are processed, on the basis of which hand-over processing is always performed without fail.

The present invention as described above has advantages that a terminal registered beforehand is capable of always performing hand-over to the Home-BTS of the registration source, and that hand-over to the registered Home-BTS can be given priority over hand-over to an unregistered BTS.

This makes it possible for a registered user who has, for example, a Home-BTS at home, to quickly and always perform hand-over to the Home-BTS at home from an outdoor conventional BTS, and further to be provided with stable service.

### Brief Description of the Drawings

Figure 1 is a figure showing an arrangement of a mobile communication system to which the present invention is applied; and

Figure 2 is a flow chart showing an operation of the system shown in Figure 1.

### Description of Symbols

- 1: Terminal
- A1: The area covered by BTS1
- A2: Area covered by BTS2
- H1: Area covered by Home-BTS1
- H12: Area covered by Home-BTS2

### Best Mode for Carrying Out the Invention

In the following, an embodiment according to the present invention is described with reference to the drawings.

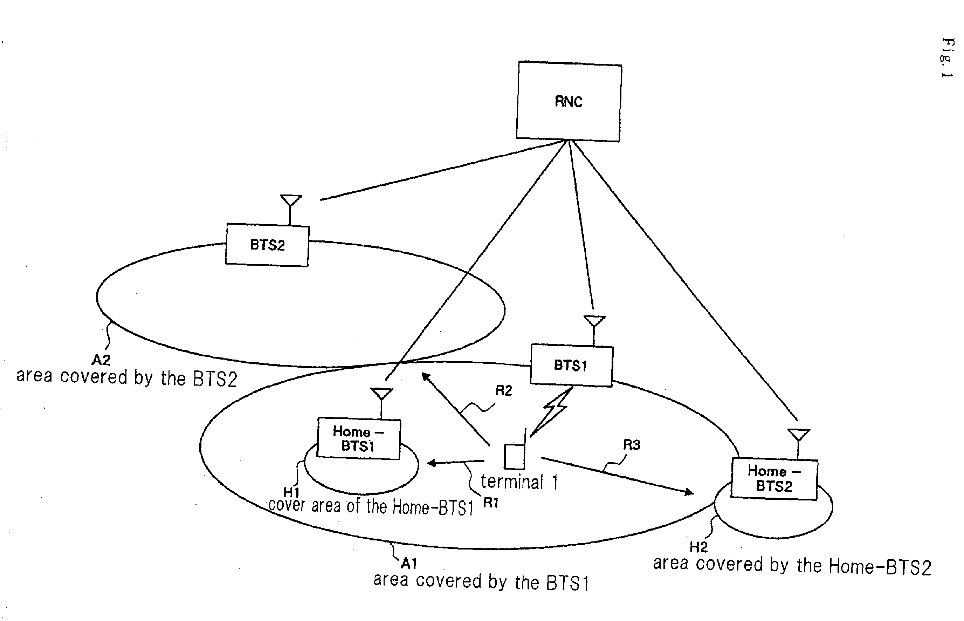

Figure 1 is a figure showing an arrangement of a mobile communication system to which the present invention is applied. The system shown in Figure 1 comprises conventional BTS (BTS 1), Home-BTS 1 installed within area covered by A1 of BTS 1, Home-BTS 2 installed outside the area (dead zone) covered by BTS 1, an RNC which performs control of each of the BTSs, and terminal 1 which is present in the area covered by BTS 1.

The RNC and terminal 1 perform communication with BTS 1, BTS 2, Home-BTS 1 and Home-BTS 2. In the RNC, a terminal which receives services provided by the respective Home-BTSs is registered in the corresponding, respective Home-BTSs.

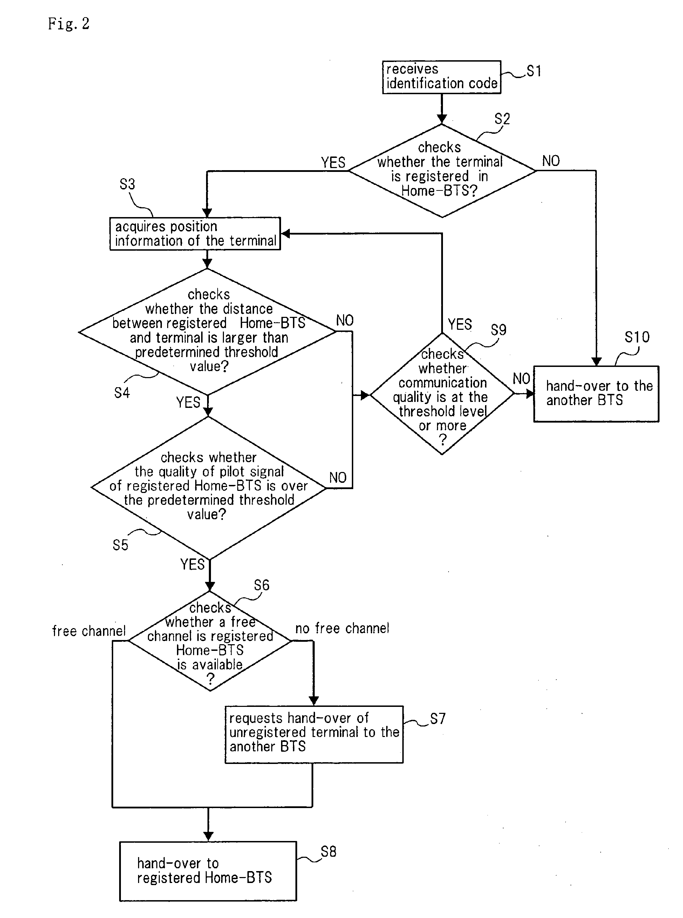

Figure 2 is a flow chart showing an operation of the system at the time when terminal 1 performs hand-over to the Home-BTS, and is a flow chart mainly showing an operation of the RNC.

An operation of the present embodiment is explained with reference to Figure 1 and Figure 2.

It is assumed that terminal 1 is registered in Home-BTS 1 and is connected only with BTS 1 at present. The procedure for registering with Home-BTS 1 is not specified in particular here, but is assumed to be performed by a method determined between terminal 1 and the Home-BTS. For example, it is possible to consider a method in which specific identification codes assigned for respective Home-BTSs are stored beforehand in terminal 1 by using infrared communication and the like. The identification codes also include position information on the Home-BTS, and the information is used at the time when hand-over to the Home-BTS is performed.

First, an operation when terminal 1 accesses Home-BTS 1 from BTS 1 in Figure 1 (corresponding to route R1 in Figure 1) is explained.

When the RNC that monitors the identification code information of terminal 1 transmitted from BTS 1 receives the identification code notified from the terminal via the BTS (step S1), the RNC checks whether or not terminal 1 is registered beforehand in a specific Home-BTS on the basis of the identification code information of terminal 1 transmitted from BTS 1 (step S2).

When it is determined in step S2 that terminal 1 is not registered in any of the Home-BTSs, the method according to the present invention is not applied, and hand-over is performed in a manner similar to the conventional technique (step S10).

When it is determined in step S2 that terminal 1 is registered in a specific Home-BTS (Home-BTS 1 in this case), the following operations are performed so as to enable reliable hand-over to Home-BTS 1.

The RNC acquires position information of the terminal (step S3). Then, the RNC calculates the distance between Home-BTS 1 and terminal 1 from the position information about Home-BTS 1, which is included in the identification code of terminal 1, and from present position information of terminal 1, and checks whether or not the calculated distance is not larger than a predetermined threshold value (hand-over threshold value) (step S4). By adding coordinate data such as, for example, latitude and longitude to the position information, it is possible to easily determine the distance between the two points by the calculation performed in step S3. Further, the hand-over threshold value is preferably set to a value little larger than the distance from Home-BTS 1 to the cell border of Home-BTS 1.

When it is determined that the distance between terminal 1 and Home-BTS 1 is shorter than the hand-over threshold value (distance is short) in step S4, the RNC checks whether or not the quality of the pilot signal of Home-BTS 1 which is measured by terminal 1 meets a predetermined threshold level (pilot threshold level) or more (step S5). The hand-over threshold level is set to a level slightly lower (to a lower quality) than the threshold level used for hand-over to the conventional BTS, thereby enabling the terminal registered beforehand to be handed over to Home-BTS 1 where the terminal was earlier registered.

When it is determined that the quality of the pilot signal of Home-BTS 1 which is measured in step S5 is higher than the pilot threshold level, the RNC checks whether a free channel is available in the Home-BTS where the terminal was originally registered (step S6). When it is determined that there is no free carrier in Home-BTS 1 in step S6, the RNC searches for a terminal which can be handed over to another BTS (here BTS 1) among the unregistered terminals which are connected to and communicating with Home-BTS 1, and requests hand-over of the unregistered terminal to BTS 1 (step S7). Thereafter, when hand-over of the unregistered terminal from Home-BTS 1 is completed and a free channel sufficient for accommodating terminal 1 is obtained in Home-BTS 1, the RNC allows terminal 1 to be handed over to Home-BTS 1 (step S8). In this case, even if communication quality has deteriorated at the time when the unregistered user is handed over to BTS 1, the RNC gives priority to handing over of terminal 1 to Home-BTS 1. On the other hand, when it is determined that there is a free channel in the Home-BTS where the terminal was originally registered in step S6, the RNC moves to step S8, and allows terminal 1 to be handed over to the Home-BTS where it was originally registered.

When it is determined in step S4 that the distance between terminal 1 and Home-BTS 1 is larger than the hand-over threshold value (more remote), and when it is determined in step S5 that the quality of the pilot signal of Home-BTS 1 which is measured by terminal 1 is lower than the predetermined threshold level, the RNC measures the present quality of communication with BTS 1, and compares the measured present communication quality with a predetermined threshold level (call quality threshold level) to check whether or not the measured present communication quality meets the threshold level or more (step S9). When it is determined in step S9 that the present call quality is higher than the above described call quality threshold level, the RNC returns to step S3 and acquires position information regarding the location of terminal 1. When it is determined in step S9 that the present call quality is lower than the call quality threshold level, the RNC moves to step S10, and attempts to perform hand-over to BTSs other than Home-BTS 1. This operation is also the same as the operation at the time when the quality of pilot signal of Home-BTS 1 which is measured by terminal 1 in step S5 is lower than the above described pilot threshold level.

Next, a case is considered in which terminal 1, that is not registered in Home-BTS 2, accesses Home-BTS 2 instead of accessing Home-BTS 1 where it is registered. In this case, the distance between terminal 1 and Home-BTS 1 (Home-BTS in which terminal 1 is registered) is larger than the hand-over threshold value (terminal 1 is present well outside the cell of Home-BTS 1). For this reason, in the flow chart shown in Figure 2, the result of operation in step S4 is denoted as "NO" (the distance between terminal 1 and Home-BTS 1, where terminal 1 was originally registered is larger than the hand-over threshold value). In step S9, terminal 1 ensures that the quality of the call with BTS 1 is comparable to the call quality threshold level. When the quality of the call with BTS 1 is lower than the threshold level, terminal 1 is handed over to Home BTS 2 in accordance with the conventional technique (step S10).

The above described operation is similarly performed in the case where terminal 1 moves in the R1 direction on route R1 shown in Figure 2 at the time when terminal 1 is not registered in Home-BTS 1, and the case where terminal 1 moves to BTS 2 which is different from both Home-BTS 1 (in which terminal 1 is registered) and Home-BTS 2 in Figure 2.

## Claims

1. A mobile communication system comprising:
a base station;
a plurality of small base stations provided in an area covered by the base station as a countermeasure against the dead zone of the base station;
a terminal for receiving a specific service provided by the plurality of small base stations; and
an RNC which has the identification number of a terminal, registered therein, for receiving a service provided by each of the plurality of small base stations, and which, when the identification number from the terminal is received, checks whether or not a free channel is available in the small base station registered corresponding to the identification number, and, if there is no free channel available in the small base station registered corresponding to the identification number, requests a terminal not registered in the small base station to be handed over to another base station and then performs hand-over to the small base station having the identification number of the terminal registered therein.

2. The mobile communication system according to claim 1,
wherein when the identification number is received from the terminal, the RNC checks whether or not the distance between the small base station, that has identification number that corresponds to the terminal registered in the base station, and the terminal, is not larger than a predetermined value, and, if the distance is not larger than the predetermined value, the RNC checks whether or not a free channel is available in the small base station.

3. The mobile communication system according to claim 1,
wherein when the identification number is received from the terminal, the RNC checks whether or not the communication quality of the pilot signal between the small base station, that has an identification number that corresponds to the terminal registered in the base station, and the terminal, is a predetermined level or more, and, if the communication quality of the pilot signal is the predetermined level or more, the RNC checks whether or not a free channel is available in the small base station.

4. A method of hand-over to a small radio base station of a mobile communication system provided with a base station, a plurality of small base stations provided in an area covered by the base station as a countermeasure against dead zone of the base station, and a terminal for receiving a specific service provided by the plurality of small base stations, the hand-over method comprising:
a first step of recognizing the identification number of a terminal which receives a service provided by each of the plurality of small base stations;
a second step of, when the identification number has been obtained from the terminal, checking whether or not a free channel is available in the small base station registered corresponding to the identification number; and
a third step of, if it is determined in the second step that there is no free channel available in the small base station registered corresponding to the identification number, requesting a terminal not registered in the small base station to be handed over to another base station and then performing hand-over to the small base station having the identification number of the terminal registered therein.

5. The method of hand-over to the small radio base station of the mobile communication system according to claim 4, further comprising:
a step of, after the first step, checking whether or not the distance between the small base station, that has an identification number that corresponds to the terminal registered in the base station, and the terminal, is not larger than a predetermined value, and if the distance is not larger than the predetermined value, performing the second step.

6. The method of hand-over to the small radio base station of the mobile communication system according to claim 4, further comprising:
a step of, after the first step, checking whether or not the communication quality of the pilot signal between the small base station, that has an identification number that corresponds to the terminal registered in the base station, and the terminal, is not lower than a predetermined level, and if the communication quality of the pilot signal is the predetermined level or more, performing the second step.
